# EUROPEAN PATENT SPECIFICATION

(11) **EP 1 007 490 B1**
(45) Date of publication and mention of the grant of the patent: **24.11.2004**
(21) Application number: 98939023.2
(22) Date of filing: 14.08.1998
(51) Int. Cl.: C03C 25/32

(54) **COATED OPTICAL FIBER AND RADIATION-CURABLE RESIN COMPOSITION**
BESCHICHTETE OPTISCHE FASER UND STRAHLUNGSHÄRTBARE HARZZUSAMMENSETZUNG
FIBRE OPTIQUE REVETU ET COMPOSITION DE RESINE CAPABLE DE DURCIR SOUS UN RAYONNEMENT

(30) Priority: 15.08.1997 JP 23544997
(43) Date of publication of application: 14.06.2000
(73) Proprietor: DSM IP Assets B.V., 6411 TE Heerlen (NL); JSR Corporation, Tokyo 104-0045 (JP)
(72) Inventor: ISHIKAWA, Miyuki, Ibaraki 300 (JP); KOMIYA, Zen, Ibaraki 305 (JP); UKACHI, Takashi, Ibaraki 300-12 (JP)
(74) Representative: den Hartog, Jeroen Hendrikus Joseph
(86) International application number: PCT/NL1998/000464
(87) International publication number: WO 1999/008975

(56) References cited:
- EP-A- 0 111 280
- EP-A- 0 301 733
- EP-A- 0 336 653
- WO-A-96/17000
- WO-A-97/19898
- WO-A-98/32780
- GB-A- 2 163 755

## Description

### Field of the Invention

The present invention relates to a radiation-curable resin composition, and, especially to a radiation-curable resin composition that is suitable as a coating material for substrates, in particular optical fibers.

### Background of the Invention

Optical fibers, especially, optical glass fibers, are fragile and easily damaged and hence these are coated with a coating material. Various types of coatings have been described as coating material in the art. Generally, two coatings are applied to coat optical fiber materials: a relatively soft primary coating and a comparatively hard secondary coating. For example, WO96/17000, EP 0 336 653 A2 and GB 2163755 describe primary coating compositions, while EP 0 301 733 A1 describes a secondary coating. Alternatively, EP 0 111 280 A1 describes a coating that tries to incorporate the properties of primary and secondary coatings in a single coating. In addition, assemblies of fibers are often contained in an additional matrix or ribbon coating. Such coatings have been described in WO97/19898 and WO98/32780.

The properties, specifically, the modulus of elasticity and the like of a coating film made of, for example, a UV-ray curable resin have a great influence on the transmission performances of optical fibers. When optical fibers are coated with a primary coating material having a high modulus of elasticity, the transmission loss of the optical fibers increases because of high lateral pressure. A material having a low modulus of elasticity is, therefore, desirable as the primary coating material. However, conventional coating materials having a low modulus of elasticity have the drawbacks that these materials have generally low breaking strength and are hence fragile. Specifically, it is desired that the modulus of elasticity of the primary coating material for optical fibers be 0.15 kg/mm² or less in terms of secant modulus prescribed in JIS K7127 to absorb high lateral pressure. However, the breaking strength of cured products having such a low modulus of elasticity is as low as 0.15 kg/mm² or less in terms of the tensile strength at break prescribed in JIS K7127. The products thus exhibit only poor practicability.

An object of the present invention is to provide a radiation-curable resin composition which is suitable for use as a substrate coating material, in particular, an optical fiber coating material, and, more particularly, as a primary coating material for optical fibers which has a high breaking strength while exhibiting a low modulus of elasticity.

### Summary of the Present Invention

Accordingly, the present invention provides a coated optical fiber comprising:
a coating having,
a tensile strength at break of more than 0.15 kg/mm², and
a secant modulus of 0.15 kg/mm² or less.

Furthermore, the present invention provides a radiation-curable resin composition, comprising:
(A) a polymer composition comprising one or more polyether polyol urethane-based polymers having 1.2 or more polymerizable unsaturated groups on average in one molecule and a number average molecular weight of 3,000-30,000;
(B) a poly-functional monomer having a two or more polymerizable unsaturated groups;
(C) a monomer having one polymerizable unsaturated group; and
(D) a radiation-active initiator, wherein the radiation-curable resin composition is irradiated with ultraviolet light in air at a dose of 1 J/cm² to provide a cured product having at a thickness of 200 µm a secant modulus of 0.15 kg/mm² or less and a tensile strength at break of more than 0.15 kg/mm².

### DETAILED DESCRIPTION OF THE INVENTION AND PREFERRED EMBODIMENTS

The composition of the present invention will now be explained in detail by way of a preferred embodiment. Herein certain terms, unless otherwise specified, are understood to used refer to certain chemical groups and compounds. These terms are defined below.
"(meth)acrylic acid" refers to substituted and unsubstituted acrylic acid, methacrylic acid and mixtures thereof, with unsubstituted (meth)acrylic acid being preferred;
"(meth)acryloyl group" refers to a substituted and unsubstituted acryloyl group, methacryloyl group and mixtures thereof, with the unsubstituted (meth)acryloyl group being preferred;
"(meth)acrylate" refers to substituted and unsubstituted acrylate,methacrylate, and mixtures thereof, with unsubstituted (meth)acrylate being preferred.

### Component (A)

Component (A) is a polymer composition comprising one or more polyether polyol urethane-based polymers (having a number average molecular weight of 3,000-30,000) such that the total polymers present have on average 1.2 or more polymerizable unsaturated groups per molecule. The polymerizable unsaturated group in the present specification is a radical polymerizable ethylenically unsaturated group include, for example, (meth)acryloyl and (meth)acrylate groups. The average number of polymerizable unsaturated groups per polymer molecule in the polymer composition selected for component (A) is 1.2 or more, preferably from 1.2 to 4, and morepreferably from 1.5 to 2.5. The number of the polymerizable unsaturated groups contained in each molecule of the polymer may be one or two or more. However, it is necessary that the average number of the polymerizable unsaturated groups in the total component (A) is 1.2 or more per molecule. If the average number of the polymerizable unsaturated groups is less than 1.2 per molecule, only insufficient curing of the composition is obtained. On the other hand, if the average number is too high, an excessive cross-linking reaction is caused, whereby the cured product tends to be fragile.

The number average molecular weight of the polymer is from 3,000 to 30,000, and preferably from 5,000 to 20,000. If the number average molecular weight is less than 3,000, the elongation of the resulting cured product decreases, which causes the tenacity to decrease easily and tends to produce a transmission loss of optical fiber when the composition is used as a coating material for optical fibers. On the other hand, if the number average molecular weight exceeds 30,000, the viscosity of the resulting composition becomes too large, making it difficult to handle the composition with ease.

The polymers useful in polymer composition of component (A) includes those which contain two or more urethane bonds, and preferably 2-10 urethane bonds. If the number of urethane bonds is less than two, the tenacity of the resulting cured product decreases, which tends to produce a transmission loss of optical fiber when the composition is used as a coating material for optical fibers.

In the polymer composition which is component (A), there are the above limitations to the number of the polymerizable unsaturated groups, the number of urethane bonds, and the number average molecular weight. However, the principal chain of suitable polymers should comprise at least one polyether polyol. The polyether polyol urethane-based polymer may be used either singly or in combination with a wide variety of polymer backbones including a polyester polyol urethane-based polymer, a polycaprolactone polyol urethane-based polymer, or the like. Either all or a part of the component (A) may be a polyether polyol urethane-based polymer.

The polymer used as the component (A), which is composed of a polyether polyol urethane-based polymer as a basic structure, is produced by reacting (a) a polyether polyol (hereinafter called "polyether polyol (a)") obtained by a ring-opening reaction of an alkylene oxide, (b) a polyisocyanate (hereinafter called "polyisocyanate (b)"), and (c) a compound (hereinafter called "compound (c)") containing both of active hydrogen capable of reacting with the isocyanate group and a polymerizable unsaturated group.

The above polyether polyol (a) is a polyol possessing a polyoxyalkylene structure composed of a polyoxyalkylene group having 2-10 carbon atoms as a repetitive unit and is preferably a diol.

Given as examples of diols possessing the above polyoxyalkylene structure are polyglycol compounds such as polyethylene glycol, polypropylene glycol, polytetramethylene glycol, polyheptamethylene glycol, polyhexamethylene glycol, polydecamethylene glycol, and the like; and polyether diols obtained by ring-opening copolymerization of two or more ionic polymerizable cyclic compounds.

Examples of ion-polymerizable cyclic compounds include cyclic ethers such as ethylene oxide, propylene oxide, butene-1-oxide, isobutene oxide, 3,3-bischloromethyl oxetane, tetrahydrofuran, 2-methyl tetrahydrofuran, 3-methyl tetrahydrofuran, dioxane, trioxane, tetraoxane, cyclohexene oxide, styrene oxide, epichlorohydrin, glycidyl methacrylate, glycidyl acrylate, allyl glycidyl ether, allyl glycidyl carbonate, butadiene monoxide, isoprene monoxide, vinyl oxetane, vinyl tetrahydrofuran, vinyl cyclohexene oxide, phenyl glycidyl ether, butyl glycidyl ether, and glycidyl benzoate, with cyclic ethers such as ethylene oxide and tetrahydrofuran.

Also, polyether diols produced by ring-opening copolymerization of the above ion-polymerizable cyclic compound and a cyclic imine such as ethylene imine or the like, a cyclic lactone such as p-propiolactone or glycolic acid lactide or the like, or cyclic siloxane such as dimethylcyclopolysiloxane or the like can be used.

Examples of the specific combinations of two or more ion-polymerizable cyclic compounds include combinations of tetrahydrofuran and propylene oxide, tetrahydrofuran and 2-methyl tetrahydrofuran, tetrahydrofuran and 3-methyl tetrahydrofuran, tetrahydrofuran and ethylene oxide, and propylene oxide and ethylene oxide. Two or more ion-polymerizable cyclic compounds may be combined at random in the resulting ring-opening polymer.

The aforementioned diols having a polyoxyalkylene structure are commercially available under the trademarks, for example, PTMG1000, PTMG2000 (manufactured by Mitsubishi Chemical Corp.), PPG1000, PPG2000, EXCENOL2020, EXCENOL1020 (manufactured by Asahi Oline Co., Ltd.), PEG1000, Unisafe DC1100, Unisafe DC1800 (manufactured by Nippon Oil and Fats Co., Ltd.), PPTG2000, PPTG1000, PTG400, PTGL 2000 (manufactured by Hodogaya Chemical Co., Ltd.), and the like.

In the foregoing production, a diol having no polyoxyalkylene structure and/or a diamine may be used in combination with the polyether polyol (a). Here, as examples of a diol having no polyoxyalkylene structure, a polyester diol, polycaprolactone diol, polycarbonate diol, and the like are given. Examples of a polyester diol include polyester diols obtained by reacting polyhydric alcohol such as ethylene glycol, propylene glycol, tetramethylene glycol, 1,6-hexane diol, neopentyl glycol, or 1,4-cyclohexanedimethanol with a polybasic acid such as phthalic acid, isophthalic acid, terephthalic acid, maleic acid, fumaric acid, adipic acid, sebacic acid, or the like. Examples of a polycaprolactone diol include polycaprolactone diols obtained by reacting ε-caprolactone diol with a diol such as ethylene glycol, tetramethylene glycol, 1,6-hexane diol, neopentyl glycol, 1,4-butane diol, or the like. As examples of the polycarbonate diol, a polycarbonate diol of polytetrahydrofuran, polycarbonate of 1,6-hexane diol, and the like are given. These polycarbonate diols are commercially available under the trademarks DN-980, DN-981, DN-982, DN-983 (manufactured by Nippon Polyurethane Industry Co., Ltd.), PC-8000 (manufactured by PPG in US), and the like. Given as examples of the diamine are diamines such as ethylenediamine, tetramethylenediamine, hexamethylenediamine, p-phenylene diamine, 4,4'-diamino diphenylmethane, diamines including a hetero atom, and polyether diamines.

The aforementioned polyisocyanate (b) is a compound containing 2-6 isocyanate groups with diisocyanates being preferred. Specific examples of the polyisocyanate (b) include 2,4-tolylene diisocyanate, 2,6-tolylene diisocyanate, 1,3-xylene diisocyanate, 1,4-xylene diisocyanate, 1,5-naphthalene diisocyanate, p-phenylene diisocyanate, 3,3'-dimethyl-4,4'-diphenylmethane diisocyanate, 4,4'-diphenylmethane diisocyanate, 3,3'-dimethylphenylene diisocyanate, 4,4'-biphenylene diisocyanate, hexamethylene diisocyanate, isophorone diisocyanate, dicyclohexylmethane diisocyanate, methylenebis(4-cyclohexylisocyanate), hydrogenated diphenylmethane diisocyanate, 2,2,4-trimethylhexamethylene diisocyanate, bis (2-isocyanatoethyl) fumarate, 6-isopropyl-1,3-phenyl diisocyanate, 4-diphenylpropane diisocyanate, and lysine diisocyanate.

The above-noted compound (c) having an active hydrogen and a polymerizable unsaturated group, may include, for example, (meth)acryl type compounds having at least one hydroxyl group. Specific examples of the compound (c) include 2-hydroxyethyl (meth)acrylate, 2-hydroxypropyl (meth)acrylate, 2-hydroxyoctyl (meth)acrylate, pentaerythritol tri(meth)acrylate, glycerol di(meth)acrylate, dipentaerythritol monohydroxy penta(meth)acrylate, 1,4-butanediol mono(meth)acrylate, 4-hydroxycyclohexyl (meth)acrylate, 1,6-hexanediol mono(meth)acrylate, neopentyl glycol mono(meth)acrylate, trimethylolpropane di(meth)acrylate, trimethylolethane di(meth)acrylate, and (meth)acrylates represented by the following formulae (1) and (2): 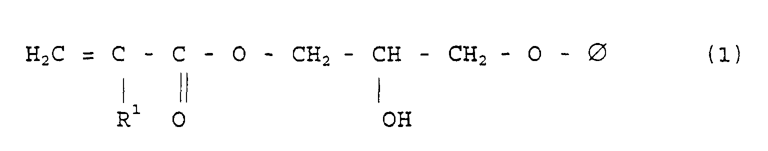 wherein R¹ represents a hydrogen atom or a methyl group; 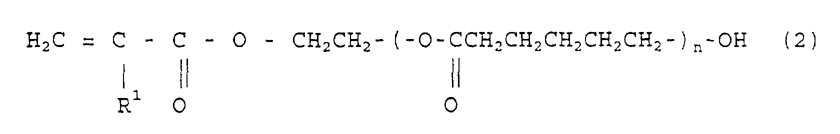 wherein R¹ is the same as defined above and n denotes an integer from 1 to 5. Among these groups, 2-hydroxylethyl (meth)acrylate is given as a preferable example.

Polymer (A) may be prepared by reacting at least one polyether-based polyol (a) with at least one polyisocyanate (b) and at least one compound (c) in accordance with procedures and in proportions know for forming such reactions. As for the polymer (A) forming reaction of the polyether polyol (a) with the polyisocyanate (b) and the compound (c), for example, when a diol compound is reacted with a diisocyanate compound and a compound having an ethylenic unsaturated group, it is desirable to use a urethanization catalyst such as copper naphthanate, cobalt naphthanate, zinc naphthanate, dibutyltin dilaurate, triethyl amine, 1,4-diazabicyclo[2.2.2]octane, 2,6,7-trimethyl-1,4-diazabicyclo[2.2.2]octane, or the like in an amount of 0.01 to 1 part by weight of 100 parts of the total amount of reaction components. This reaction may be carried out at any suitable temperature, typically this reaction is performed at a temperature of 10 to 90°C, and preferably 30 to 80°C.

The component (A) may either be composed entirely of a polyether polyol urethane-based polymers or include polyether polyol urethane-based polymers as a major component as well as other polymers corresponding to the component (A). Examples of these other polymers meeting the category of the component (A) include polyester polyol urethane-based polymers, polycaprolactone polyol urethane-based polymers, and the like. When the polyether polyol urethane-based polymer is used in combination with the other polymers, the proportion of the polyalkylene structure in the component (A) is preferably at least 50 but not exceeding 98% by weight, more preferably at least 60 but not exceeding 93% by weight, and most preferably at least 70 but not exceeding 90% by weight. If the proportion of the polyoxyalkylene structure in the component (A) is too small, the modulus of elasticity of the resulting cured product increases at a lower temperature, for example, 0°C or less, which tends to cause the transmission loss of optical fiber when the composition is used as a coating material for optical fibers.

The proportionate amount of the component (A) polymer ) in the composition of the present invention is generally from 25 to 75% by weight, and preferably from 40 to 70% by weight. If the proportion of the component (A) is too small, the elongation of the resulting cured product from the composition decreases, whereas if the proportion is too large, the viscosity of the composition increases, whereby the handling characteristics tend to be impaired.

### Component (B)

The poly-functional monomer used as component (B) in the present invention contains two or more, generally 2-10, and preferably 2-6 polymerizable unsaturated groups. It is desirable to use a (meth)acryloyl group as the polymerizable unsaturated group.

In order for the cured coating composition to attain high breaking strength while maintaining a low modulus of elasticity, the poly-functional monomer will preferably have a comparatively low molecular weight, specifically 800 or less, preferably from 100 to 800, and more preferably from 150 to 600. Given as preferable examples of such a poly-functional monomer include di, tri, and tetra(meth)acrylates, with di and tri(meth)acrylates being preferred, and those having a mw of 800 or less being particularly preferred, such as trimethylolpropane tri(meth)acrylate, pentaerythritol (meth)acrylate, ethylene glycol di(meth)acrylate, tetraethylene glycol di(meth)acrylate, polyethylene glycol di(meth)acrylate, 1,4-butanediol di(meth)acrylate, 1,6-hexanediol di(meth)acrylate, 1,9-nonane diol di(meth)acrylate, neopentyl glycol di(meth)acrylate, trimethylolpropane trioxyethyl (meth)acrylate, tris(2-hydroxyethyl) isocyanuratetri(meth)acrylate, tris(2-hydroxyethyl) isocyanuratedi(meth)acrylate, tricyclodecane dimethanoldi(meth)acrylate, epoxy(meth)acrylate produced by adding a (meth)acrylate to diglycidyl ether of bisphenol A, and 3-methyl-1,5-pentane diol diacrylate. Among these, particularly preferred poly-functional monomers include 1,6-hexanediol diacrylate, 1,9-nonane diol diacrylate, triethylene glycol diacrylate, trimethylolpropanealkoxy triacrylate and tricyclodecanedimethanol diacrylate. These monomers as the component (B) may be used either singly or in combinations of two or more.

These poly-functional monomers are commercially available under the trademarks, for example, HDDA, L-C9A (manufactured by Daiichi Kogyo Seiyaku Co., Ltd.), Yupimer UV, SA1002, SA2007 (manufactured by Mitsubishi Chemical Corp.), 3-EGA, 14-EGA (manufactured by Kyoeisha Co., Ltd.), PHOTOMER4149 (Sun Nopco Co., Ltd.), Viscoat 700 (manufactured by Osaka Organic Chemical Industry Co., Ltd.), KAYARAD R-604, DPCA-20, 30, 60, 120, HX-620, D-310, 330 (manufactured by Nippon Kayaku Co., Ltd.), Aronix M-210, 215, 315, 325 (manufactured by Toagosei Co., Ltd.), A-MPD (Shin-Nakamura Chemical Co., Ltd.), and the like.

It is desirable that the component (B) poly-functional monomers in the composition of the present invention are present in an amount of 0.1 to 10% by weight, and particularly 0.5 to 5% by weight. If the amount of the component (B) is too small, the breaking strength of the resulting cured product decreases, whereas if the amount is too large, the modulus of elasticity of the cured product is exceedingly high and the elongation of the cured product decreases, indicating that such a composition is not suitable as a primary coating material for optical fibers.

### Component (C)

Polymerizable unsaturated group containing monomers suitable as component (C) in the coating composition of the present invention include, for example, monomers possessing only one polymerizable unsaturated group, such as a vinyl group, and a molecular weight of 1,000 or less, and preferably from 70 to 800. Although there are no limitations to the kind of polymerizable vinyl group, it is desirable that a (meth)acryloyl group, N-vinyl group, (meth)acrylamide group, vinyl ether group, vinyl ester group, or the like be contained as the polymerizable vinyl group. Among these, a (meth)acryloyl group is desirable.

Component (C) functions as a reactive diluent in the composition of the present invention and hence it is desirable that component (C) be liquid at 25°C The types and amounts of compounds used as component (C) are adjusted to control the viscosity of the composition and the modulus of elasticity of the resulting cured product. If component (C) is composed of a plurality of compounds, the selected compounds are preferably liquids when mixed and result in a mixture that is liquid at 25°C.

Specific examples of suitable monomers for use as component (C) include 2-hydroxyethyl(meth)-acrylate, 2-hydroxypropyl(meth)acrylate, 2-hydroxy-butyl(meth)acrylate, methyl(meth)acrylate, ethyl(meth)acrylate, propyl(meth)acrylate, isopropyl(meth)acrylate, butyl(meth)acrylate, amyl(meth)acrylate, isobutyl(meth)acrylate, t-butyl-(meth)acrylate, pentyl(meth)acrylate, isoamyl(meth)acrylate, hexyl(meth)acrylate, heptyl(meth)acrylate, octyl(meth)acrylate, isooctyl(meth)acrylate, 2-ethylhexyl(meth)acrylate, nonyl(meth)acrylate, decyl(meth)acrylate, isodecyl(meth)acrylate, undecyl(meth)acrylate, dodecyl(meth)acrylate, lauryl(meth)acrylate, octadecyl(meth)acrylate, stearyl(meth)acrylate, tetrahydrofurfuryl(meth)acrylate, butoxyethyl(meth)acrylate, ethoxydiethylene glycol (meth)acrylate, benzyl(meth)acrylate, cyclohexyl(meth)acrylate, phenoxyethyl(meth)acrylate, polyethylene glycol mono(meth)acrylate, polypropylene glycol mono(meth)acrylate, methoxy ethylene glycol (meth)acrylate, ethoxyethyl(meth)acrylate, methoxypolyethylene glycol (meth)acrylate, methoxypolypropylene glycol (meth)acrylate, dicyclopentadienyl(meth)acrylate, dicyclopentanyl(meth)acrylate, dicyclopentenyl(meth)acrylate, tricyclodecanyl(meth)acrylate, isobornyl(meth)acrylate, bornyl(meth)acrylate, diacetone(meth)acrylamide, isobutoxymethyl(meth)acrylamide, N-vinylpyrrolidone, N-vinylcaprolactam, N-vinylformaldehyde, N,N-dimethyl(meth)acrylamide, t-octyl(meth)acrylamide, dimethylaminoethyl(meth)acrylate, diethylaminoethyl(meth)acrylate, 7-amino-3,7-dimethyloctyl (meth)acrylate, N, N-diethyl(meth)acrylamide, N,N'-dimethylaminopropyl(meth)acrylamide, (meth)acryloylmorpholine, hydroxybutyl vinyl ether, lauryl vinyl ether, cetyl vinyl ether, vinyl ethers such as 2-ethylhexyl vinyl ether, maleates, fumarates, and the compounds represented by the following formulae (3) to (5): 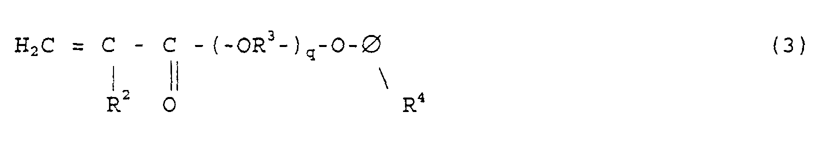 wherein R² represents a hydrogen atom or a methyl group, R³ independently represents an alkylene group having 2-6, and preferably 2-4 carbon atoms, R⁴ being attached to the aromatic ring (Ø), represents a hydrogen atom or an alkyl group having 1-12, and preferably 1-9 carbon atoms, and q denotes an integer from 0 to 12, and preferably from 1 to 8. 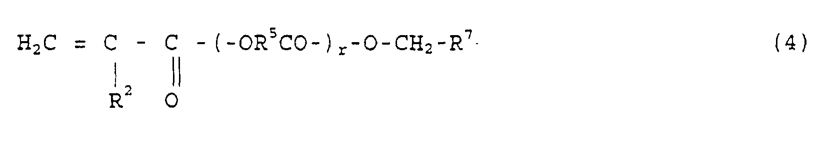 wherein R² is the same as defined above, R⁵ independently represents an alkylene group having 2-8, and preferably 2-5 carbon atoms, and r denotes an integer from 1 to 8, and preferably from 1 to 4, and R⁷ represents a tetrahydrofuryl group. 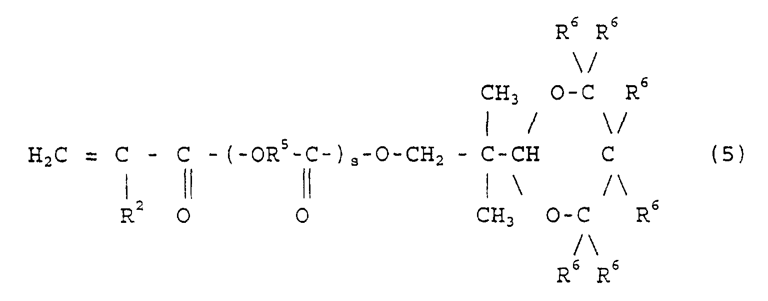 wherein R² and R⁵ are the same as defined above, s denotes an integer from 1 to 15, and each R⁶ independently represent a hydrogen atom or a methyl group.

Given as examples of compounds represented by formula (3) are nonylphenol EO-modified (8 mols) acrylate, phenol EO-modified (4 mols) acrylate, nonylphenol EO-modified (4 mols) acrylate, nonylphenol PO-modified (2.5 mols) acrylate, nonylphenol EO-modified (1 mol) acrylate, and phenol EO-modified (2 mols) acrylate.

The above exemplified compounds may be used independently or in combinations of two or more.

Among the above exemplified compounds, preferred compounds for use as component (C) include N-vinyllactams such as N-vinyl pyrrolidone, N-vinyl-ε-caprolactam (hereinafter called "N-vinyl caprolactam"), and the like. It is preferred that component (C) include, relative to component (C), N-vinylcaprolactam in a range of 3 to 20% by weight, and preferably 3 to 15% by weight.

It is desirable that the component (C) contain a compound having an alicyclic structure because the resulting cured product has water resistance, hot water resistance, acid resistance, alkali resistance, and the like and has improved long-term reliability. Examples of such a monomer having an alicyclic structure, particularly, alicyclic (meth)acrylate compounds, include isobornyl(meth)-acrylate, dicyclopentenyl(meth)acrylate, tricyclodecanyl(meth)acrylate, cyclohexyl(meth)acrylate, tricyclodecanedimethanoldi(meth)acrylate, and the like. Among these, isobornyl acrylate and tricyclodecanedimethanol diacrylate are desirable.

In a preferred embodiment, component (C) includes a combination of N-vinyllactams and compound having an alicyclic structure.

Monomers suitable for use in component (C) are commercially available under the trademarks, for example, Aronix M-102, M-111, M-113, M-114, M-117 (manufactured by Toagosei Co., Ltd.), KAYARAD TC110S, R629, R644 (manufactured by Nippon Kayaku Co., Ltd.), Viscoat 3700 (Osaka Organic Chemical Industry Co., Ltd.) and the like.

It is desirable that component (C) be present in an amount of 20 to 70% by weight, and preferably 25 to 55% by weight relative to the composition of the present invention.

### Component (D)

Examples of radiation-active initiators suitable for use as component (D) in the present invention include 1-hydroxycyclohexyl phenyl ketone, 2,2-dimethoxy-2-phenylacetophenone, xanthone, fluorenone, benzaldehyde, fluorene, anthraquinone, triphenylamine, carbazole, 3-methylacetophenone, 4-chlorobenzophenone, 4,4'-dimethoxybenzophenone, 4,4'-diaminobenzophenone, Michler's ketone, benzoin propyl ether, benzoin ethyl ether, benzyl methyl ketal, 1-(4-isopropylphenyl)-2-hydroxy-2-methylpropan-1-one, 2-hydroxy-2-methyl-1-phenylpropan-1-one, thioxanthone, diethylthioxanthone, 2-isopropylthioxanthone, 2-chlorothioxanthone, 2-methyl-1-[4-(methylthio)phenyl]-2-morpholino-propan-1-one, 2,4,6-trimethylbenzoyl diphenylphosphine oxide, bis(2,6-dimethoxybenzoyl)-2,4,4-trimethylpentyl phosphine oxide, and the like. These compounds may be used either singly or in combinations of two or more. Among these compounds, 2,4,6-trimethylbenzoyl diphenylphosphine oxide, bis(2,6-dimethoxybenzoyl)-2,4,4- trimethylpentyl phosphine oxide, and 1-hydroxycyclohexyl phenyl ketone are desirable.

Examples of commercially available products suitable for use as component (D) include Irgacure 184, 651, 500, 907 (manufactured by Ciba Speciality Chemicals Co., Ltd.), Lucirin LR8728, Lucirin LR8953X (manufactured by BASF), Darocur E1116, 1173 (manufactured by Ciba Speciality Chemicals Co., Ltd.), and Ubecryl P36 (manufactured by UCB Co.).

Component (D) may include one of more radiation-active initiator The proportion of component (D) in the composition of the present invention is generally from 0.1 to 10% by weight, and preferably from 1 to 5% by weight, relative to the total weight of the composition.

A photoinitiator agent may also be used as required by the particular application in addition to the radiation-active initiators present as component (D). Given as suitable examples of photoinitiators are triethylamine, diethylamine, N-methyldiethanoleamine, ethanolamine, 4-dimethylaminobenzoic acid, ethyl 4-dimethylaminobenzoate, isoamyl 4-dimethylaminobenzoate, and the like. These compounds are commercially available under the trademarks, for example, of Ubecryl P102, 103, 104, 105 (manufactured by UCB Co.) and the like.

### Other components

In addition, depending the particulars of the end use for the composition, it may be preferred to employ ingredients in addition to components (A) to (D). Given as typical examples of such additional ingredients are antioxidants, UV absorbers, light stabilizers, silane coupling agents, aging preventives, thermal polymerization inhibitors, leveling agents, colorants, surfactants, preservatives, plasticizers, lubricants, solvents, fillers, wettability improvers, coating surface improvers, and the like. As examples of antioxidants, phenol type antioxidants, organic sulfur type antioxidants, and the like are given. These antioxidants are commercially available under the trademarks, for example, Irganox1010, 1035, 1076, 1222 (manufactured by Ciba Speciality Chemicals Co., Ltd.) and the like.

As examples of UV-absorbers, benzotriazole type UV-absorbers and the like are given. Examples of commercially available products used as the UV absorbers include Tinuvin P, 234, 320, 326, 327, 328, 213 (manufactured by Ciba-Geigy), Sumisorb 110, 130, 140, 220, 250, 300, 320, 340, 350, 400 (manufactured by Sumitomo Chemical Industries Co., Ltd.), and the like.

As examples of light stabilizers, hindered amine type light stabilizers and the like are given. Examples of commercially available products of the light stabilizers include Tinuvin 292, 144, 622LD (manufactured by Ciba Speciality Chemicals Co., Ltd.), Sanol LS-770, 765, 292, 2626, 1114, 744 (manufactured by Sankyo Chemical Co.), and the like.

Examples of compounds used as silane coupling agents include γ-aminopropyltriethoxysilane, γ-mercaptopropyltrimethoxysilane, γ-methacryloxypropyltrimethoxysilane, and commercially available products such as SH6062, SZ6030 (manufactured by Toray-Dow Corning Silicone Co.), KBE903, KBM803 (manufactured by Shin-Etsu Silicone Co., Ltd.), and the like. As examples of aging preventive agents, phenol type, allyamine type, and ketone amine type aging preventive agents are given. Examples of commercially available products of the aging preventives include Antigene W, S, P, 3C, 6C, RD-G, FR, AW (manufactured by Sumitomo Chemical Industries Co., Ltd.), and the like.

The composition of the present invention can be prepared by formulating the aforementioned components (A) to (D) and components added as required in prescribed amounts respectively.

The viscosity at 25°C of the resulting composition is preferably from 1,000 to 20,000 cp, and more preferably from 1,500 to 15,000 cp, to ensure excellent coatability on optical fibers.

The composition of the present invention is radiation-curable so that it can be cured by exposure to appropriate radiation. Here, radiation source includes infrared light, visible rays, ultraviolet light, α-rays, β-rays, γ-rays, and the like. When the composition is cured, for example, by exposure to ultraviolet light, it can be cured at a dose of 2 to 2000 mJ/cm², preferable 50-200 mJ/cm².

### Utility

The composition of the present invention are suitable for many uses including, for example, as a paint, surface reforming material, printing ink, and coating material for substrates, in particular optical fibers.

Among the cured products produced by irradiating with ultraviolet light at a dose of 1 J/cm² in air, those at a thickness of 200 µm cured coating having a secant modulus (prescribed in JIS K 7127) of 0.15 kg/mm² or less, more preferably 0.1 to 0.05 kg/mm² and a tensile strength at break (prescribed in JIS K 7127) of more than 0.15 kg/mm² , more preferably 0.25 kg/mm² to 0.50 kg/mm², are preferably used as a primary coating for optical fibers since these possess an appropriate modulus of elasticity and excellent breaking strength when these are used as a primary coating for optical fibers. In order to obtain coated optical glass fibers with good handling properties, it is preferred to have the glass fiber which is coated with an adhering primary coating, further coated with a harder secondary coating.

A coating layer of the composition in accordance with the present invention can have a thickness in the range of 5 to 500 µm, preferably 15 to 300 µm. A primary coating for optical glass fibers generally has a thickness of about 30 µm (15-50 µm).

In a preferred form of the composition of the present invention, the composition comprises components (A), (B), (C), and (D) in ranges, relative to the total weight of the composition, of from 25 to 75% by weight, from 0.1 to 10% by weight, from 20 to 70% by weight, and 0.1 to 10% by weight, respectively. Preferred composition of the present invention include those having a viscosity of 1,000 to 20,000 at 25°C. The composition of the present invention is preferably adapted for use as a primary coating for optical fibers.

### EXAMPLES

The present invention will be explained in more detail by way of examples, which are not intended to be limiting of the present invention. In the examples hereinafter "part(s)" indicates "part(s) by weight" unless otherwise described.

### Synthesis Example 1

### Synthesis of a polymer for component (A)

4.07 g of tolylene diisocyanate (including 97.5% by weight or more of a 2,4-derivative and 2.5% by weight or less of a 2,6-derivative), 59.3 g of a ring-opening copolymer of ethylene oxide and tetrahydrofuran having a number average molecular weight (hereinafter abbreviated as "Mn") of 4,000, 0.02 g of 2,6-di-t-butyl-p-cresol, and 0.007g of phenothiazine were placed in a reaction vessel equipped with a stirrer. This mixture was cooled with ice until the temperature of the mixture was 10°C or lower while stirring. When the temperature was 10°C or lower, 0.08 g of dibutyltin dilaurate was added to the mixture, followed by stirring for 2 hours, while controlling the liquid temperature at 20 to 30°C. Then, 0.33 g of γ-mercaptopropyltrimethoxysilane (trademark: SH6062, manufactured by Toray-Dow Corning Silicone Co., Ltd.), which is a silane coupling agent, was added and the mixture was stirred at 40 to 50°C for one hour. After the stirring was completed, 1.15 g of 2-hydroxyethyl acrylate was added and the resulting mixture was stirred at a liquid temperature of 45 to 55°C for 30 minutes.

Next, 0.13 g of methanol was added to the reaction solution, which was continuously stirred at 55 to 60°C for four hours. The reaction was terminated when the residual isocyanate was 0.1% by weight or less to obtain a liquid urethane acrylate polymer with a Mn of 8,327, which corresponded to the component (A).

### Examples 1 to 5 and Comparative Examples 1 and 2

10 g of lauryl acrylate, 17 g of polyoxyethylene nonyl phenyl ether acrylate (trademark: M113, manufactured by Toagosei Co., Ltd.), 5 g of N-vinylcaprolactam, 0.8 g of Irganox 1035 as an antioxidant, 2 g of 2,4,6-trimethylbenzoyl diphenylphosphine oxide, and 0.15 g of diethylamine were added to 65 g of the liquid urethane acrylate polymer prepared in Synthetic Example 1. The mixture was stirred, while controlling the temperature at 50 to 60°C, until a uniform and transparent liquid was prepared to obtain a resin solution I.

In Examples 1 to 5, 100 parts of the resin solution I and each of the poly-functional monomers shown in Table 1 in the amount shown in Table 1 were placed in a reaction vessel equipped with a stirrer to prepare a composition. The mixture was stirred for 3 hours while controlling the temperature at 50 to 60°C. The viscosity of each of the resulting compositions was measured by a B-type viscometer at 25°C. The results are shown in Table 2. The viscosity of each of all compositions was in a range from 5,000 to 6,000 cp. In Comparative Example 1, the resin solution I was used as it was without using a poly-functional monomer.

**Table 1**

| | (B) Poly-functional monomer (parts) | Viscosity (cp/25°C) |
|---|---|---|
| Example 1 | 1,6-hexanediol diacrylate (1.5) | 5500 |
| Example 2 | 1,9-nonanediol diacrylate (3.0) | 5400 |
| Example 3 | Triethylene glycol diacrylate (1.0) | 5500 |
| Example 4 | Tricyclodecanedimethanol diacrylate(3.0) | 5400 |
| Example 5 | Trimethylolpropane-alkoxy triacrylate(2.0) | 5500 |
| Comp. Example 1 | - | 5500 |
| Comp. Example 2 | Lauryl acrylate (2.5) | 5400 |

Each of the compositions prepared in this manner was applied to the surface of a glass plate using an applicator for 250µm thickness and was irradiated with ultraviolet light at a dose of 1.0 J/cm ² in air using a 3.5 kW metal halide lamp (SMX-3500/F-OS, manufactured by ORC Co., Ltd.) to obtain a cured film with a thickness of 200 µm. The cured film was then cut into strip specimens of 0.6 cm width to make a test sample. The condition of the test sample was appropriately adjusted at 23°C under a humidity of 50% for 12 hours or more and then subjected to measurements of modulus of elasticity and breaking strength illustrated below. The results are shown in Table 2.

### Measurement of modulus of elasticity

The secant modulus was measured in the conditions of a tension speed of 1 mm/minute and an interval between bench marks of 25 mm according to JIS K7127.

### Measurement of breaking strength

The tensile strength at break was measured in the conditions of a tension speed of 50 mm/minute and an interval between bench marks of 25 mm at 23°C under a humidity of 50%RH according to JIS K7127.

**Table 2**

| | Secant modulus (kg/mm²) | Tensile strength at break (kg/mm²) |
|---|---|---|
| Example 1 | 0.06 | 0.48 |
| Example 2 | 0.07 | 0.42 |
| Example 3 | 0.06 | 0.37 |
| Example 4 | 0.08 | 0.34 |
| Example 5 | 0.10 | 0.28 |
| Comp. Example 1 | 0.04 | 0.06 |
| Comp. Example 2 | 0.04 | 0.05 |

As is clear from Tables 1 and 2, each of the compositions of Examples 1 to 5 had a viscosity of an appropriate range for coating optical fibers and the resulting cured product exhibited a tensile strength at break as high as 0.26 to 0.42 kg/mm² while its secant modulus was as low as 0.06 to 0.11 kg/mm². On the other hand, the cured film prepared from the compositions of Comparative Examples 1 and 2 excluding the poly-functional monomer had a low tensile strength at break.

It is apparent from the aforementioned explanations that the radiation curable composition of the present invention is featured in that the cured product possesses a high breaking strength while its modulus of elasticity is low. Hence, when the radiation curable composition is used as a coating material for optical fibers, it can protect optical fibers for a long period of time in a safe and stable manner while an excellent optical transmission performance is maintained.

## Claims

1. A coated optical fiber, wherein the primary coating is formed from a radiation-curable composition comprising:
(B) a polymer composition comprising one or more polyether polyol urethane-based polymers having a number average molecular weight of 3,000-30,000, wherein the composition has on average 1.2 or more polymerizable unsaturated groups per polymer molecule;
(B) a poly-functional monomer having two or more polymerizable unsaturated groups;
(C) a monomer having one polymerizable unsaturated group; and
(D) a radiation-active initiator,
the coating having,
a tensile strength at break of more than 0.15 kg/mm², and
a secant modulus of 0.15 kg/mm² or less.

2. The coated optical fiber according to claim 1, wherein the polymer composition (A) comprises a polymer derived from a polyoxyalkylene polyether polyol.

3. The coated optical fiber according to any one of claims 1-2, wherein the polymer composition includes at least one polymer having 2-10 urethane bonds.

4. The coated optical fiber according to any one of claims 1-3, wherein the radiation-curable composition comprises, relative to the total radiation-curable composition, between 40 and 70% wt of the polymer composition (A).

5. The coated optical fiber according to any one of claims 1-4, wherein the poly-functional monomer (B) has a molecular weight of 800 or less.

6. The coated optical fiber according to any one of claims 1-5, wherein the radiation-curable composition comprises relative to the total radiation-curable composition, between 0.1 and 10 wt.% of polyfunctional monomer (B).

7. The coated optical fiber according to any one of claims 1-6, wherein the monomer (C) comprises a polymerizable vinyl group.

8. A radiation curable resin composition, comprising:
(A) a polyether polyol urethane-based polymer composition having 1.2 or more polymerizable unsaturated groups on average in one molecule, and a number average molecular weight of 3,000-30,000;
(B) a poly-functional monomer having a two or more polymerizable unsaturated groups;
(C) a monomer having one polymerizable unsaturated group; and
(D) a radiation-active initiator,
wherein the radiation-curable resin composition (at a thickness of 200 µm) if irradiated with ultraviolet light in air at a dose of 1 J/cm² provides a cured product having a secant modulus of 0.15 kg/mm² or less and a tensile strength at break of more than 0.15 kg/mm².

9. The coating composition according to claim 8, wherein the radiation-curable composition has a viscosity, at 25ºC, of from 1,000 to 20,000 cp.

10. The coating composition according to any one of claims 8-9, wherein the cured product has a secant modulus of 0.05-0.1 kg/mm², and a tensile strength at break of 0.25-0.5 kg/mm².

11. A coated optical fiber having a primary coating according to any one of claims 1-7 adhering to the glass substrate.

12. A coated optical fiber according to claim 11 further having a secondary coating adhering to the primary coating.

## Patentansprüche

1. Beschichtete optische Faser, wobei die Primärbeschichtung aus einer strahlungshärtbaren Zusammensetzung gebildet ist, umfassend:
(A) eine Polymerzusammensetzung, welche ein oder mehrere Polyetherpolyolurethan-basierende Polymere mit einem Molekulargewichts-Zahlenmittel von 3.000 bis 30.000 umfaßt, wobei die Zusammensetzung im Durchschnitt 1,2 oder mehr polymerisationsfähige ungesättigte Gruppen pro Polymermolekül aufweist,
(B) ein polyfunktionelles Monomer mit zwei oder mehr polymerisationsfähigen ungesättigten Gruppen,
(C) ein Monomer mit einer polymerisationsfähigen ungesättigten Gruppe und
(D) einen strahlungsaktiven Initiator,
wobei die Beschichtung eine Reißfestigkeit von mehr als 0,15 kg/mm² und einen Sekantenmodul von 0,15 kg/mm² oder weniger aufweist.

2. Beschichtete optische Faser nach Anspruch 1, wobei die Polymerzusammensetzung (A) ein aus einem Polyoxyalkylenpolyetherpolyol abgeleitetes Polymer umfaßt.

3. Beschichtete optische Faser nach einem der Ansprüche 1 bis 2, wobei die Polymerzusammensetzung mindestens ein Polymer mit 2 bis 10 Urethanbindungen einschließt.

4. Beschichtete optische Faser nach einem der Ansprüche 1 bis 3, wobei die strahlungshärtbare Zusammensetzung, bezüglich der gesamten strahlungshärtbaren Zusammensetzung, zwischen 40 und 70 Gew.% der Polymerzusammensetzung (A) umfaßt.

5. Beschichtete optische Faser nach einem der Ansprüche 1 bis 4, wobei das polyfunktionelle Monomer (B) ein Molekulargewicht von 800 oder weniger aufweist.

6. Beschichtete optische Faser nach einem der Ansprüche 1 bis 5, wobei die strahlungshärtbare Zusammensetzung, bezüglich der gesamten strahlungshärtbaren Zusammensetzung, zwischen 0,1 und 10 Gew.% polyfunktionelles Monomer (B) umfaßt.

7. Beschichtete optische Faser nach einem der Ansprüche 1 bis 6, wobei das Monomer (C) eine polymerisationsfähige Vinylgruppe umfaßt.

8. Strahlungshärtbare Harzzusammensetzung, umfassend:
(A) eine Polyetherpolyolurethan-basierende Polymerzusammensetzung, welche 1,2 oder mehr polymerisationsfähige ungesättigte Gruppen im Durchschnitt in einem Molekül und ein Molekulargewichts-Zahlenmittel von 3.000 bis 30.000 aufweist,
(B) ein polyfunktionelles Monomer mit zwei oder mehr polymerisationsfähigen ungesättigten Gruppen,
(C) ein Monomer mit einer polymerisationsfähigen ungesättigten Gruppe und
(D) einen strahlungsaktiven Initiator,
wobei die strahlungshärtbare Harzzusammensetzung (bei einer Dicke von 200 µm), wenn sie mit Ultraviolettstrahlung an Luft bei einer Dosis von 1 J/cm² bestrahlt wird, ein gehärtetes Produkt mit einem Sekantenmodul von 0,15 kg/mm² oder weniger und einer Reißfestigkeit von mehr als 0,15 kg/mm² bereitstellt.

9. Beschichtungszusammensetzung nach Anspruch 8, wobei die strahlungshärtbare Zusammensetzung bei 25°C eine Viskosität von 1.000 bis 20.000 cP aufweist.

10. Beschichtungszusammensetzung nach einem der Ansprüche 8 bis 9, wobei das gehärtete Produkt einen Sekantenmodul von 0,05 bis 0,1 kg/mm² und eine Reißfestigkeit von 0,25 bis 0,5 kg/mm² aufweist.

11. Beschichtete optische Faser mit einer Primärbeschichtung nach einem der Ansprüche 1 bis 7, welche an das Glassubstrat anhaftet.

12. Beschichtete optische Faser nach Anspruch 11, welche weiter eine an die Primärbeschichtung anhaftende Sekundärbeschichtung aufweist.

## Revendications

1. Fibre optique revêtue, dans laquelle le revêtement primaire est formé à partir d'une composition durcissable par irradiation comprenant :
(A) une composition de polymères comprenant un ou plusieurs polymères à base de polyéther polyol uréthane ayant une masse moléculaire moyenne en nombre de 3 000-30 000, la composition ayant en moyenne 1,2 groupes insaturés polymérisables ou plus par molécule de polymère ;
(B) un monomère polyfonctionnel ayant deux groupes insaturés polymérisables ou plus;
(C) un monomère ayant un groupe insaturé polymérisable ; et
(D) un initiateur activé par irradiation ; le revêtement ayant,
une résistance à la rupture en traction supérieure à 0,15 kg/mm², et
un module sécant de 0,15 kg/mm² ou moins.

2. Fibre optique revêtue selon la revendication 1, dans laquelle la composition de polymères (A) comprend un polymère dérivé d'un polyoxyalkylène polyéther polyol.

3. Fibre optique revêtue selon l'une quelconque des revendications 1-2, dans laquelle la composition de polymères comprend au moins un polymère ayant 2-10 liaisons uréthane.

4. Fibre optique revêtue selon l'une quelconque des revendications 1-3, dans laquelle la composition durcissable par irradiation comprend, rapporté à la composition durcissable par irradiation totale, entre 40 et 70 % pds de composition de polymères (A).

5. Fibre optique revêtue selon l'une quelconque des revendications 1-4, dans laquelle le monomère polyfonctionnel (B) a une masse moléculaire de 800 ou moins.

6. Fibre optique revêtue selon l'une quelconque des revendications 1-5, dans laquelle la composition durcissable par irradiation comprend, rapporté à la composition durcissable par irradiation totale, entre 0,1 et 10 % pds de monomère polyfonctionnel (B).

7. Fibre optique revêtue selon l'une quelconque des revendications 1-6, dans laquelle le monomère (C) comprend un groupe vinyle polymérisable.

8. Composition de résine durcissable par irradiation comprenant :
(A) une composition de polymère à base de polyéther polyol uréthane ayant 1,2 groupes insaturés polymérisables ou plus en moyenne dans une molécule, et une masse moléculaire moyenne en nombre de 3 000-30 000 ;
(B) un monomère polyfonctionnel ayant deux groupes insaturés polymérisables ou plus ;
(C) un monomère ayant un groupe insaturé polymérisable ; et
(D) un initiateur activé par irradiation ;
la composition de résine durcissable par irradiation (à une épaisseur de 200 µm), si elle est irradiée par une lumière ultraviolette dans l'air à une dose de 1 J/cm², donnant un produit durci ayant un module sécant de 0,15 kg/mm² ou moins et une résistance à la rupture en traction supérieure à 0, 15 kg/mm².

9. Composition de revêtement selon la revendication 8, dans laquelle la composition durcissable par irradiation a une viscosité, à 25 °C, entre 1 000 et 20 000 cp.

10. Composition de revêtement selon l'une quelconque des revendications 8-9, dans laquelle le produit durci a un module sécant de 0,05-0,1 kg/mm² et une résistance à la rupture en traction de 0,25-0,5 kg/mm².

11. Fibre optique revêtue ayant un revêtement primaire selon l'une quelconque des revendications 1-7 adhérant au substrat de verre.

12. Fibre optique revêtue selon la revendication 11, ayant en outre un revêtement secondaire adhérant au revêtement primaire.
